Europäisches Patentamt

European Patent Office

Office européen des brevets

(11) Publication number: **0 027 223**
**B1**

## EUROPEAN PATENT SPECIFICATION

(45) Date of publication of patent specification: **02.10.85**

(21) Application number: **80106026.0**

(22) Date of filing: **04.10.80**

(51) Int. Cl.⁴: **G 02 B 6/10**

(54) **Single mode optical fibers.**

(30) Priority: **08.10.79 JP 130449/79**

(43) Date of publication of application:
**22.04.81 Bulletin 81/16**

(45) Publication of the grant of the patent:
**02.10.85 Bulletin 85/40**

(84) Designated Contracting States:
**DE FR GB IT NL**

(56) References cited:
**US-A-3 778 132**
**US-A-4 089 586**

**ELECTRONICS LETTERS, vol. 15, no. 23,
November 1979, pages 765-767, "Minimum
dispersion at 1,55 um for single-mode step-
index fibres"
Electronics letters, vol. 15, no. 13, June 1979,
pages 396,397.
Applied Optics, vol. 18, no. 14, July 1979, pages
2521-2522**

(73) Proprietor: **Nippon Telegraph and Telephone
Public Corporation
1-6 Uchisaiwai-cho 1-chome Chiyoda-ku
Tokyo 100 (JP)**

(72) Inventor: **Okamoto, Katsunari
2090, Higashiakatsuka
Mito City Ibaraki Prefecture (JP)**
Inventor: **Edahiro, Takao
2-6, Higashihara
Mito City Ibaraki Prefecture (JP)**
Inventor: **Kawana, Akio
2-19-13 Iwatominami-machi
Komae City, Tokyo (JP)**
Inventor: **Miya, Tetsuo
2-4, Higashihara
Mito City, Ibaraki Prefecture (JP)**

(74) Representative: **Wenzel, Heinz-Peter et al
Patentanwälte, Wenzel & Kalkoff Grubes Allee
26 Postfach 73 04 66
D-2000 Hamburg 73 (DE)**

Courier Press, Leamington Spa, England.

## Description

The invention relates to a single mode optical fibre of the step type comprising a core made of glass having a refractive index $n_1$ and a cladding surrounding the core and made of glass having a refractive index of $n_2$, the relative index difference $\Delta$ expressed by

$$\Delta = \frac{n_1 - n_2}{n_1} \times 100$$

and the diameter 2a of the core being so determined that the total dispersion $\sigma_T$ formed by the sum of the values of the material dispersion $\sigma_M$ and the waveguide dispersion $\sigma_W$ becomes substantially nil in a predetermined wavelength region.

Various efforts have been made to improve the single mode optical fibre, to meet requirements raised by the development of an optical communication, and in recent years improved single mode optical fibres have been developed which, in addition to ordinary characteristics of light weight, non-inductiveness, and no crosstalking, have a lower loss than a transmission line utilizing such metal conductor as a millimeter wave guide and can transmit data over a wider frequency band. Recently, it was contemplated to use optical fibres for a long distance ultrawide frequency band optical communication at a frequency of 1 GHz and without using any repeating station.

It has been theoretically classified that it is necessary to reduce the total dispersion to be less than $\pm 1$ ps/km/nm and to reduce the transmission loss to be less than 0.5 dB/km in order to realize such a long distance ultra wide band transmission. Considering the transmission characteristics of a present day optical fibre from this standpoint the ultra wide band long distance transmission involves certain problems for the following reasons.

More particularly, in an optical fibre, light entering into the core transmits therethrough by repeatedly reflecting the interface between the core and the cladding, and the deterioration of the transmission characteristics caused by the dispersion of light can be analysed as follows:

(1) Multimode dispersion

This is caused by the fact that the propagation constant representing the propagation state of the light varies nonlinearly with respect to the angular frequency of the light and that as the angular frequency increases, higher order modes appear in the light propagating mode so that group velocities vary for different modes.

(2) Material dispersion ($\sigma_M$)

This is caused by the fact that the refractive index of glass constituting the optical glass varies non-linearly and that the material dispersion $\sigma_M$ of a single mode optical fibre is shown by the following equation

$$\sigma_M = \frac{\lambda}{C} \cdot \frac{d^2 n_1}{d\lambda^2} \qquad (1)$$

where $n_1$ represents the refractive index of the core, $\lambda$ the wavelength of light and C the light velocity in vacuum.

(3) Waveguide dispersion ($\sigma_W$)

The waveguide dispersion is determined by the relationship between the propagation constant $\beta$ and the angular frequency of light $\omega$ and expressed by the following equation in the case of the single mode optical fibre

$$\sigma_W = \frac{1}{\lambda} \cdot \omega \cdot \frac{d^2 \beta}{d\omega^2} \qquad (2)$$

In the case of a multimode optical fibre it is necessary to take into consideration the three dispersions described above. In order to decrease the signal distortion by minimising the dispersions as far as possible it is contemplated to use a single mode optical fibre so that it is not necessary to consider the multimode dispersion but only the material dispersion and the waveguide dispersion. Accordingly, in the case of the single mode optical fibre a sum ($\sigma_M + \sigma_W$) of the material dispersion $\sigma_M$ and the waveguide dispersion $\sigma_W$ constitutes the total dispersion $\sigma_T$, and the frequency bandwidth f in which signals can be transmitted without distortion is expressed by the following equation:

$$f = \frac{0.187}{\sigma_T} \qquad (3)$$

In a typical prior art optical fibre the following values are applied: the diameter of the core 2a=9.0 µm, the refractive index of the core $n_1$=1.46319, and the difference in the relative refractive indices of the core and cladding

$$\Delta = \frac{n_1 - n_2}{n_1} \times 100(\%) = 0.2\%.$$

Examples of such single mode optical fibre are described in a publication by K. Daikoku et al entitled "Direct Measurement of Wavelength Dispersion in Optical Fibres—Difference Method" in Electronics Letters, 1978, Vol. 14, no. 5 pp. 149—151.

With such prior art optical fibres, when the wavelength of light e.g. varies in a range of 0.9—1.6 µm, the material dispersion varies in a range of from +66 to −25 ps/km/nm and the difference in the refractive index and the core diameter have values as described, the waveguide dispersion $\sigma_W$ varies in a range of from 4 to 13 ps/km/nm. For this reason the total dispersion $\sigma_T$ varies in the positive and negative directions about $\lambda=1.43$ µm. Accordingly, when the optical fibre is operated at a wavelength $\lambda=1.43$ µm, at which the total dispersion $\sigma_T$ becomes zero the distortion of the signal becomes minimum so that transmission over a long distance at a wide bandwidth becomes possible. However, even if the wavelength differs only slightly from 1.43 µm the total dispersion $\sigma_T$ increases greatly resulting in that the frequency bandwidth f shown in equation (3) decreases rapidly.

Accordingly, with such prior art optical fibre, even when the total dispersion $\sigma_T$ is made to be equal to $\pm 1$ ps/km/nm suitable for long distance transmission the usable wavelength width is merely from 1.41—1.43 µm. Thus, for a long distance wide bandwidth transmission, even when the wavelength is divided or multiplexed for the purpose of improving the transmission efficiency it is impossible to operate the optical fibre in the wavelength range mentioned above.

Furthermore, attempts have been made to minimize the total dispersion $\sigma_T$ for several chosen values of the relative difference $\Delta$ between the refractive indices of the core and the cladding of a fibre and of the core diameter for a particular wavelength range. Such attempts is a single mode optical fibre of the species as set out in the introductory paragraph of this specification have been described in "Electronic Letters, Vol. 15, no. 13 of June 1979, pp. 396—397" and "Applied Optics, Vol. 18, no. 14 of July 1979, pp. 2521—2522". However, these teachings are restricted to a total dispersion of $\sigma_T=0$ for a wavelength $\lambda$ of approximately 1.5 µm, while $\sigma_T$ will differ considerably from zero over a wider wavelength range beyond $\lambda=1.5$ µm even if the relative refractive index difference were maintained at $\Delta=2.4\%$.

It is therefore the task of the present invention to provide an improved single mode optical fibre enabling wavelength division multiplex transmission by providing for wider band transmission characteristics by means of optimising a particular characteristic of the optical fibre.

According to the present invention this task is solved in that the values of $\Delta$ and of the core diameter 2a satisfy the relations

$$1.0<\Delta<3.6 \text{ and } 4.78>2a>3.00 \text{ µm}$$

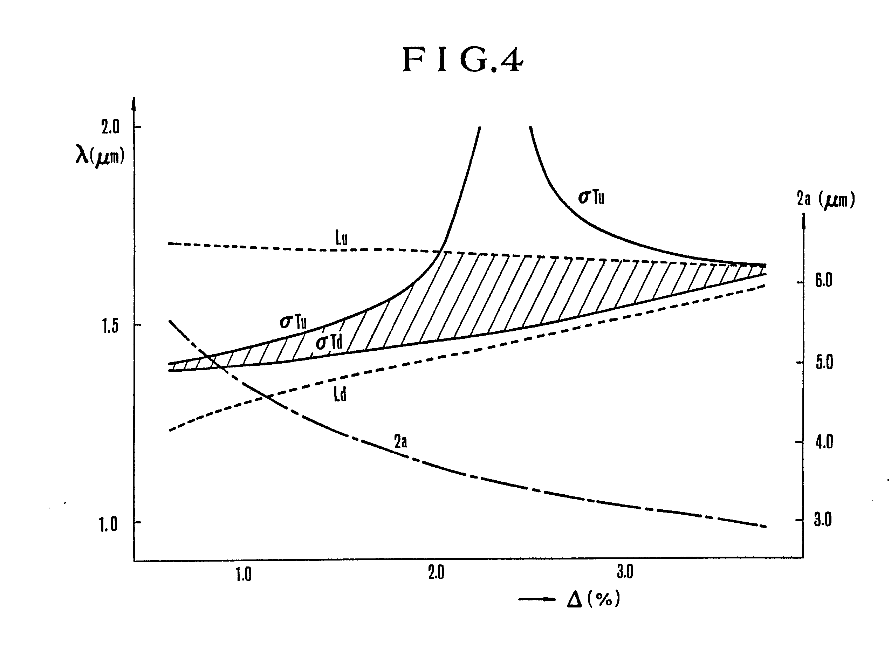

and are so determined according to the characteristic curve 2a as a function of $\Delta$ plotted in Fig. 4 for a wavelength region included in the hatched area shown in Fig. 4 that the total dispersion $\sigma_T$ is less than $\pm 1$ ps/km/nm and the transmission loss less than 0.5 dB/km. Thereby, it is possible to maintain a tolerable total dispersion $\sigma_T$ over a comparably wide wavelength range.

Preferably both the core and cladding may be made of quartz glass, the core incorporating a dopant increasing its refractive index $n_1$ to top the

index $n_2$ of the cladding. This enables an increase in the refractive index difference $\Delta$. Advantageously, the dopant may be a member selected from the material group comprising germanium, phosphor, titanium, aluminium, tantalum, zirconium, lead, barium and gallium.

The invention will now be described in greater detail with reference to the accompanying, schematic drawings showing preferred embodiments of the invention.

In the accompanying drawings:

Fig. 1 is a perspective view showing the basic construction of a single mode optical fiber embodying the invention;

Fig. 2 is a graph showing the refractive index distribution in the radial direction of the optical fiber shown in Fig. 1,

Fig. 3 is a graph showing the relationship between the wavelength and dispersion characteristics $\sigma_W$, $\sigma_M$ and $\sigma_T$ of the optical fiber shown in Fig. 1 and

Fig. 4 is a graph showing the relation between the refractive index difference and the wavelength of the light, the core diameter, the total dispersion, and the transmission loss characteristics obtained by simulation.

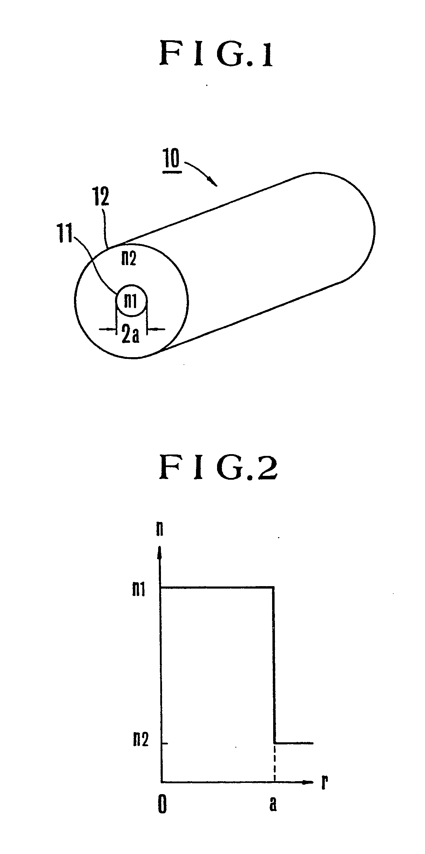

A single mode optical fiber 10 shown in Fig. 1 comprises a core 11 made of quartz glass or the like, and a cladding 12 made of similar material and surrounding the core. Denoting the refractive index of the core 11 by $n_1$, that of the cladding by $n_2$ and the radius of the core by $a$, the refractive index distribution of the core as viewed in the radial direction of the optical fiber 10 is shown in Fig. 2. As can be noted from this distribution, the optical fiber of this type has a so-called step type refractive index distribution. The refractive index difference between the core 11 and the cladding 12 is expressed by the following equation.

$$\Delta=\frac{n_1-n_2}{n_1}\times100(\%) \qquad (4)$$

According to the present invention, this refractive index difference $\Delta$ is selected to lie in a range of from 1% to 3.6% and the diameter 2a of the core 11 is selected to have a suitable value in a range of 4.8 to 3.0 µm as $\Delta$ varies (i.e., the diameter 2a would decrease as $\Delta$ increases). By using such values of the refractive index difference $\Delta$ and the core diameter 2a, it is possible to obtain an optical fiber having a total dispersion $\sigma_T$ of less than $\pm 1$ ps/km/nm and a theoretical value L of the transmission loss closely related to the refractive index difference $\Delta$ of less than 0.5 dB/km. The optical fiber embodying the invention can use a wavelength width of 0.05 to 0.23 µm, depending upon the values of the refractive index difference $\Delta$ and the core diameter 2a. As a consequence, with a wavelength width of 0.05 µm, a two wavelength multiplexing becomes possible assuming a spacing of the wavelength multiplexing of 230 Å where the wavelength shift of a semiconductor laser caused by temperature variation is 200 Å and the spectral width of a light source is from 20 to 30 Å.

The lower limit of the refractive index difference Δ is determined by the fact that the bandwidth of the wavelength is 0.05 μm so that as Δ decreases the wavelength width gradually decreases thus making wavelength multiplexing difficult. The upper limit of the refractive index difference Δ is determined by the fact that as the core diameter becomes smaller than 3 μm, the coupling between adjacent cores as well as the coupling between the core and the light source become imperfect so that losses at these portions increase. With the coupling construction according to the present invention, when the core diameter is 3 μm, it is possible to limit the coupling losses to be less than 10 dB. Moreover, with this construction, it is possible to improve the photo-coupling efficiency with the light source by 3 to 4 times since the light receiving permissible angle increases due to the increase in the refractive index difference between the core and the cladding.

Furthermore, when the optical fibre is used in a submarine cable the light is perfectly confined within the core due to a high refractive index difference, thus decreasing the increase in the transmission loss caused by hydrostatic pressure in relation to prior art optical fibers.

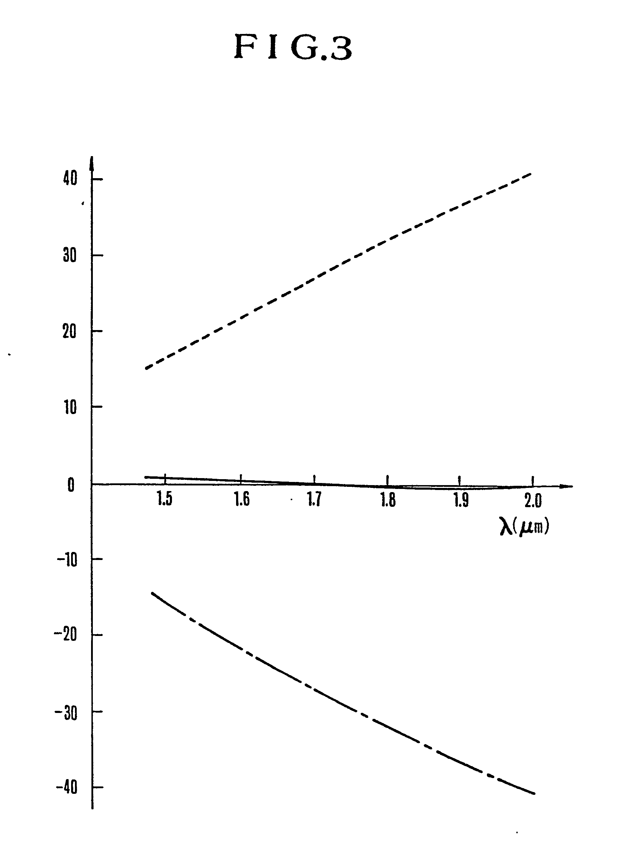

Fig. 3 is a graph showing the relationship between the wavelength of the light to be transmitted through the single mode optical fiber of the present invention and the material dispersion $\sigma_M$, the waveguide dispersion $\sigma_W$ and the total dispersion, i.e., the sum of $\sigma_M$ and $\sigma_W$. In this case, the core 11 and the cladding 12 were essentially made of quartz glass. For use as the core a germanium dopant was used for making the refractive index thereof larger than that of the cladding. Thus, the refractive index difference was Δ=2.4%, and the diameter of the core 11 was 2a=3.46 μm. As can be noted from the characteristics shown in Fig. 3, the total dispersion $\sigma_T$ was made to be less than ±1 ps/km/nm for a wavelength range of λ=1.48—2.0 μm.

By using an electronic computer, there has been made a simulation calculation for the purpose of confirming the operation and the advantageous effect of the single mode optical fiber according to the present invention. The following table shows the values of the diameter 2a of the core 11 and a wavelength range $\lambda_b$ in which the total dispersion $\sigma_T$ lies in a range of ±1 ps/km/mn when the refractive index difference Δ varies between 0.8 and 3.6%.

TABLE

| Δ(%) | 2a(μm) | $\lambda_b$(μm) |
|---|---|---|
| 3.8 | 2.94 | 1.63—1.65 |
| 3.6 | 3.00 | 1.55—1.61 |
| 2.4 | 3.46 | 1.40—2.00 |
| 2.0 | 3.68 | 1.46—1.62 |
| 1.5 | 4.12 | 1.42—1.50 |
| 1.0 | 4.78 | 1.40—1.44 |
| 0.8 | 5.19 | 1.37—1.42 |
| 0.6 | 5.62 | 1.38—1.40 |

Fig. 4 is a graph showing the low dispersion region (a region bounded by $\sigma_{Tu}$ and $\sigma_{Td}$ curves) in which $\sigma_T$ is less than ±1 ps/km/nm for the refractive index difference Δ, the diameter 2a of the core 11, and a low loss region of less than 0.5 dB/km (a region bounded by curves $L_u$ and $L_d$).

These characteristic curves show that the value of 2a should be determined in a hatched area shown in Fig. 4 in order to obtain a single mode optical fiber having characteristics presently desired, i.e., a total dispersion of less than ±1 ps/km/nm, and a transmission loss of less than 0.5 dB/km. As described above, the values of Δ and 2a that determine this area are Δ=1—3.6%, and 2a=4.78—3.00 μm. For example, to transmit mainly light essentially having a wavelength of about λ=1.5 μm the refractive index difference Δ=2.4—1.5% and the diameter of the core 11 2a=3.46—4.12 μm are adequate. In a quartz glass optical fiber, the advantageous effect of the present invention can be efficiently manifested near this wavelength, as it is known that the transmission loss is minimum near a wavelength of about 1.5 μm. The fact that the transmission loss becomes minimum near the wavelength of 1.5 μm is described in Miya's document entitled "Ultimate low loss single mode fiber at 1.55 μm" and published in Electronics Letters, Vol. 15, No. 4, pages 106—108, Feb. 15, 1979.

Furthermore, as shown in Fig. 4, where Δ=1.1% and 2a=4.62 μm, the usable wavelength bandwidth is 1.40—1.45 μm, so that there is the possibility of two wavelength multiplexing. Especially, where Δ=2.05% and 2a=3.67 μm, the usable wavelength bandwidth is 1.46—1.69 μm so

that there is a possibility of 10 wavelength multiplexing.

Although in the foregoing embodiment the core and cladding were made of quartz glass having a predetermined refractive index, incorporation of germanium acting as a dopant into the quartz glass increases the refractive index $n_1$. Thus, from equation (4) it can be noted that it is possible to increase the refractive index difference $\Delta$. In addition to germanium, the dopant or additive may be selected from the group consisting of phosphor, titanium, aluminum, tantalum, zirconium, lead, barium, and gallium.

## Claims

1. A single mode optical fibre of the step type comprising a core made of glass having a refractive index $n_1$ and a cladding surrounding the core and made of glass having a refractive index of $n_2$, the relative index difference $\Delta$ expressed by

$$\Delta = \frac{n_1 - n_2}{n_1} \times 100$$

and the diameter 2a of the core being so determined that the total dispersion $\sigma_T$ formed by the sum of the values of the material dispersion $\sigma_M$ and the waveguide dispersion $\sigma_W$ becomes substantially nil in a predetermined wavelength region, characterised in that the values of $\Delta$ and of the core diameter 2a satisfy the relations

$$1.0 < \Delta < 3.6 \text{ and } 4.78 > 2a > 3.00 \text{ } \mu m$$

and are so determined according to the characteristic curve 2a as a function of $\Delta$ plotted in Fig. 4 for a wavelength region included in the hatched area shown in Fig. 4 that the total dispersion $\sigma_T$ is less than $\pm 1$ ps/km/nm and the transmission loss less than 0.5 dB/km.

2. A single mode optical fibre according to claim 1, characterised in that both the core and cladding are made of quartz glass, the core incorporating a dopant increasing its refractive index $n_1$ to top the index $n_2$ of the cladding.

3. A single mode optical fibre according to claim 2, characterised in that the dopant is a member selected from the material group comprising germanium, phosphor, titanium, aluminium, tantalum, zirconium, lead, barium and gallium.

## Revendications

1. Fibre optique monomode du type à saut d'indice comprenant un coeur constitué en un verre ayant un indice de réfraction $n_1$ et une gaine entourant le coeur et constituée en un verre ayant un indice de réfraction $n_2$, la différence $\Delta$ d'indice relative étant exprimée par la relation

$$\Delta = \frac{n_1 - n_2}{n_1} \times 100$$

et le diamètre 2a du coeur étant ainsi déterminé que la dispersion totale $\sigma_T$ formée par la somme des valeurs par le guide d'onde $\sigma_W$ devient sensiblement nulle dans une région de longueur d'onde prédéterminée, caractérisée en ce que les valeurs de $\Delta$ et du diamètre 2a du coeur satisfont les relations:

$$1,0 < \Delta < 3,6 \text{ et } 4,78 > 2a > 3,00 \text{ } \mu m$$

et sont ainsi déterminées par rapport à la courbe caractéristique donnant 2a en fonction de $\Delta$ comme indiqué à la figure 4 pour une région de longueur d'onde comprenant la région hachurée montrée à la figure 4, que la dispersion totale $\sigma_T$ est inférieure à $\pm 1$ ps/km/nm et la perte de transmission est inférieure à 0,5 dB/km.

2. Fibre optique monomode selon la revendication 1, caractérisée en ce qu'à la fois, le coeur et la gaine sont constitués en un verre de quartz, la coeur comprenant un dopant augmentant son indice de réfraction $n_1$ de manière à dépasser l'incide $n_2$ de la gaine.

3. Fibre optique monomode selon la revendication 2, caractérisée en ce que le dopant est choisi parmi le groupe comprenant le germanium, le phosphore, le titane, l'aluminium, le tantale, le zirconium, le plomb, le barium et le gallium.

## Patentansprüche

1. Optische Einmode-Faser in Stufenart umfassend einen aus Glas hergestellten Kern mit einem Brechungsindex $n_1$ und eine den Kern umgebende, aus Glas hergestellte Umhüllung mit einem Brechungsindex $n_2$, wobei die relative Indexdifferenz $\Delta$ durch

$$= \frac{n_1 - n_2}{n_1} \times 100$$

ausgedrückt und der Durchmesser 2a des Kerns so bestimmt ist, daß die durch die Summe der Werte der Materialdispersion $\sigma_M$ und der Wellenleiter-Dispersion $\sigma_W$ gebildete Totaldispersion $\sigma_T$ in einem vorbestimmten Wellenlängenbereich im wesentlichen null wird, dadurch gekennzeichnet, daß die Werte für $\Delta$ und den Kerndurchmesser 2a den Beziehungen

$$0,1 < \Delta < 3,6 \text{ und } 4,78 > 2a > 3,00 \text{ } \mu m$$

entsprechen und derart gemäß der Kennlinie 2a, die als Funktion von $\Delta$ in Fig. 4 für einen in dem schraffierten, in Fig. 4, gezeigten Bereich enthalten ist, bestimmt sind, daß die Totaldispersion $\sigma_T$ als $\pm 1$ ps/km/nm und der Übertragungsverlust geringer als 0.5 dB/km ist.

2. Optische Einmode-Faser gemäß Anspruch 1, dadurch kennzeichnet, daß sowohl der Kern als auch die Umhüllung aus Quarzglas hergestellt sind, wobei der Kern ein seinen Brechungsindex $n_1$ vergrößerndes Dotierungsmittel enthält, das er größer als der Index $n_2$ der Umbüllung wird.

3. Optische Einmode-Faser gemäß Anspruch 2, dadurch gekennzeichnet, daß das Dotierungsmittel aus der Materialgruppe umfassen Germanium, Phosphor, Titan, Aluminium, Tantal, Zirkon, Blei, Barium und Gallium ausgewählt ist.

# F I G.1

# F I G.2

# F I G.3

# FIG.4